# EUROPEAN PATENT SPECIFICATION

(11) **EP 3 764 568 B1**
(45) Date of publication and mention of the grant of the patent: **05.04.2023**
(21) Application number: 19186067.5
(22) Date of filing: 12.07.2019
(51) Int. Cl.: H04B 10/077

(54) **METHOD AND SYSTEM FOR POWER MEASUREMENT IN CASE OF UPGRADE OF A PASSIVE OPTICAL NETWORK**
VERFAHREN UND SYSTEM ZUR LEISTUNGSMESSUNG BEI DER AUFRÜSTUNG EINES PASSIVEN OPTISCHEN NETZWERKS
PROCÉDÉ ET SYSTÈME DE MESURE DE PUISSANCE EN CAS DE MISE À JOUR D'UN RÉSEAU OPTIQUE PASSIF

(43) Date of publication of application: 13.01.2021
(73) Proprietor: Nokia Solutions and Networks Oy, 02610 Espoo (FI)
(72) Inventor: Straub, Michael, 70435 Stuttgart (DE); René, Bonk, 70435 Stuttgart (DE)
(74) Representative: IP HILLS NV

(56) References cited:
- WO-A1-2019/003491
- US-A1- 2004 042 063
- US-A1- 2010 091 355
- US-A1- 2015 304 038

## Description

### Technical Field

Various example embodiments relate to power measurements for an optical distribution network (abbreviated ODN) that forms part of a Passive Optical Network (abbreviated PON) wherein endpoints named optical network units (abbreviated ONUs) are coupled to an optical line termination (abbreviated OLT) through the shared links of the ODN. More particularly, various embodiments relate to power measurements executed when upgrading an existing and deployed PON to a next generation PON.

### Background

In a Passive Optical Network (abbreviated PON), an optical line termination (abbreviated OLT) in a central office (abbreviated CO) is coupled to multiple optical network units (abbreviated ONUs) in respective optical endpoints via an optical distribution network (ODN). The ODN typically has a tree and branch architecture and comprises optical fibres and passive splitter/combiners that split the optical signals in the downstream direction from OLT to ONUs, and multiplexes the optical signals in the upstream direction from ONUs to OLT. In a simple example where a CO is connected to n optical endpoints, n being a positive integer number, the OLT at the CO is connected via an optical fibre - the so-called feeder fibre - to a 1:n passive optical splitter which in turn is connected via n optical fibres - the so-called distribution fibres - to the n ONUs in the respective optical endpoints. To avoid collisions amongst the n users on the shared part of the ODN, for instance the feeder fibre in the above example, a time domain multiplexing (abbreviated TDM) protocol is used in the downstream direction and a time domain multiple access (abbreviated TDMA) protocol is used in the upstream direction.

Gigabit-capable Passive Optical Networks offering asymmetric downstream/upstream bitrates approximating 2.5 Gigabit/second downstream and 1.25 Gigabit/second upstream are widely deployed and operate according to the GPON standard specification ITU-T G.984. As the demand for higher downstream and upstream bitrates is growing, next generation PONs like for instance asymmetric 10G-PONs offering 10 Gigabit/second downstream and 2.5 Gigabit/second upstream (also known as XG-PON1), symmetric 10G-PONs offering 10 Gigabit/second downstream and 10 Gigabit/second upstream (variants of which are known as XG-PON2, NG-PON2, TWDM-PON or XGS-PON), or even 25G-PONs offering downstream and/or upstream speeds up to 25 Gigabit/second downstream are foreseen for new deployments and as an upgrade to replace the existing GPON deployments. In the current patent application, such evolutions from an existing, deployed PON to a PON offering higher downstream and/or upstream bitrates will generally be named an upgrade to a next generation PON.

International patent application WO2019003491 A1 entitled "Home-Side Device, Optical Communication System, and Method for Adjusting Transmission Level of Home-Side Device" describes an optical system wherein the home-side device is provided with an optical transmitter that is configured so as to output optical signals, an optical receiver that is configured so as to receive optical signals, and a variable optical attenuator that is configured so as to attenuate at least the optical signals transmitted from the optical transmitter.

United States patent application US20100091355A1 entitled "Optical Fiber Transport Devices and Optical Communication Networks" teaches that by using a wavelength routing, a single optical amplifier can have the function of a boost amplifier and the function of a preamplifier. Moreover, by attenuating a transmission signal in advance, it is possible to adjust a gain difference required in the boost amplifier and the preamplifier.

United States patent application US20040042063A1 entitled "Optical Transmission System" describes an optical transmission system with a signal control mechanism that avoids abrupt power variations of light beams, thereby preventing optical supervisory channel (OSC) signals from experiencing errors. An optical amplifier amplifies main signals under the control of an optical amplifier controller, which spends a first predetermined time to raise the output power of the optical amplifier up to a desired level. A pump light source produces a pump beam for injection to a fiber-optic transmission line so as to make it serve as an amplifying medium. The pump light source is controlled by a pump light source controller that spends a second predetermined time to raise the pump beam to a desired power level. This stepwise start-up process of the amplifier power and pump beam power prevents OSC signals from experiencing abrupt power variations.

### Summary

When upgrading an existing and deployed PON to a next generation PON, accurate knowledge of the optical losses or optical attenuation for each OLT-to-ONU connection across the ODN is desirable. The overall OLT-to-ONU attenuation comprises losses resulting from optical power splitters and attenuation due to the fibre length. Each fibre has a certain optical attenuation per unit of length. In addition operators of optical networks face the challenge that optical losses increase over time, for instance as a result of splices introduced to bond fibres during installation and/or after damages, bended fibres, flooding in locations where optical splitters are located, ageing of fibres and other components in the ODN, etc. Accurate knowledge of the optical attenuation on all OLT-to-ONU paths when upgrading a PON is important to enable the operator or system vendor to select appropriate transceivers for use after the upgrade. Optical transceivers are classified in transceiver classes according to the optical loss budget that these transceivers can bridge. In XGS-PON for instance, E2-loss budget class transceivers offer up to 35 dB optical loss budget. The ability to select transceivers of the most appropriate optical loss budget class shall enable operators and system vendors to upgrade a PON to a next generation PON with minimum complexity and minimum cost. The optical loss budget corresponds to the loss in energy or power of an optical signal as a result of travelling across the optical communication network. In other words, the optical loss budget corresponds to the difference between transmit power at the transmitter and received power at the receiver for an optical signal. Generally, the optical loss budget is expressed in decibels (dB) as a positive number and increases with the length of the optical fibre along which the optical signal has to travel and with the splitting factor on the branch of the point-to-multipoint network from the transmitter to the receiver. The optical loss budget of a transceiver is a parameter indicative for the minimum optical loss budget that the transceiver can bridge when installed at both ends of the connection (and thus operating as transmitter at one end and as receiver at the other end, and vice versa).

A straightforward solution to measure the OLT-to-ONU optical losses relies on the direct power measurement function available in today's optical transceivers. This direct power measurement function, that typically forms part of the Digital Diagnostic Monitoring (abbreviated DDM), enables optical transceivers to detect major problems on the OLT-to-ONU connection but its accuracy is insufficient to provide reliable information on the OLT-to-ONU optical losses for selecting an appropriate transceiver class at upgrade of the PON system. The accuracy of the direct power measurement function in todays standard GPON transceiver is in the order of +/- 3 dB thus leaving the operator or system vendor with an uncertainty of up to 6 dB.

The optical losses across the ODN can be measured more accurately using external optical power measurement devices. The process relying on external optical power meters however requires dispatching technicians to each and every endpoint of the optical network, obtain access to customer premises, connect the external power meters and manually perform power measurements. The effort to measure all OLT-to-ONU connections at the customer premises is too costly and complex to become commercially justifiable.

Amongst others, it is an object of embodiments of the invention to disclose a method and system for power measurement in case of upgrade of a PON that resolves one or several of the above-mentioned shortcomings. More particularly, it is an object of embodiments of the invention to disclose a method and system for power measurement that is more accurate and thus more reliable to select appropriate transceivers for use after the upgrade, and/or that can be implemented without substantial complexity or cost to the operator or system vendor.

This object is achieved, according to a first example aspect of the present disclosure, by a method for power measurement in case of upgrade of a passive optical network PON comprising an optical line termination OLT, an optical distribution network ODN and a plurality of optical network units ONUs, the method being defined by claim 1, comprising:
- the OLT generating and transmitting in a test phase an optical signal starting at current operational optical output power and stepwise reducing optical output power;
- the ONUs measuring in subsequent steps of the test phase a predetermined system performance indicator;
- determining the difference between the current operational optical output power of the OLT and the optical output power of said OLT in a step of the test phase wherein the predetermined system performance indicator drops below a predetermined performance threshold for an ONU, thereby obtaining a system power margin;
- determining from the system power margin a minimum optical loss budget of an optical transceiver suitable for the ONUs after upgrade of the PON.

Thus, embodiments of the invention concern a relative power measurement of all OLT-to-ONU connections in an existing and deployed PON. Starting from the current operational optical transmit power in the existing and deployed PON, the OLT stepwise decreases its optical output power. The impact of the stepwise decreasing optical output power on the data transmission is analysed through observation of one or several predetermined system performance parameters at the ONU side. As soon as the performance drops below a certain threshold, established by a performance criterion applied on the observed system performance parameter(s), the corresponding OLT optical output power subtracted from the current operational optical transmit power as used at the start of the test phase determines the system power margin. Indeed, the difference between the current operational transmit power and the transmit power whereat the performance of data transmission becomes unacceptable corresponds to the power margin the system still has, i.e. the maximum drop in transmit power at the OLT side before the quality or performance of one of the OLT-to-ONU connections becomes unacceptable. The so obtained system power margin and knowledge of the deployed budget class determine the minimum optical loss budget of a suitable optical transceiver to be deployed in the PON after the upgrade and consequently also the optical loss budget class where the transceivers must be selected from.

Execution of embodiments of the method for relative power measurement require a transceiver with variable transmit power levels at the OLT side and the measurement of at least one system performance parameter at the ONU sides. At the OLT side, the existing and deployed transmitter is used, at ONU side, the existing and deployed receivers are used. All OLT-to-ONU connections can be tested in parallel. Varying the transmit power level of the OLT transmitter may be realized through the PON management and control interface as most current transmitters already have the ability to vary their transmit power, for example to compensate for temperature effects. Current receivers already collect several performance indicators, like for instance the Bit Error Rate (abbreviated BER), the packet loss rate, etc. Thus, reliable data enabling optical loss budget class selection for the transceivers are obtained with no or reduced field force effort by technicians as the method mainly relies on re-using functionality that is already available within the existing and deployed PON transceivers. Only OLT-to-ONU connections with exceptionally small system power margin may still need to be measured manually. Such critical OLT-to-ONU paths may need to be analysed by a technician and a higher optical budget class transceiver may be needed on such paths.

It is noticed that a similar method could be used in upstream direction, although the upstream variant would introduce increased complexity.

It is further noticed that embodiments and features described in this specification that do not fall within the scope of the independent claims, if any, are to be interpreted as examples.

In embodiments of the method for power measurement in case of upgrade of a PON defined by claim 2, the optical output power is reduced in steps of at most 1 dB.

By reducing the optical output power of the OLT stepwise with steps of constant magnitude smaller than or equal to 1 dB, the expected accuracy whereat the system power margin can be determined is better than or equal to 1 dB. The skilled person will appreciate that variant embodiments that implement a higher step will have a smaller gain in accuracy. The skilled person also will appreciate that it is not necessary to implement fixed size steps. In alternative embodiments, the drop in optical output power may for instance decrease in subsequent steps.

In embodiments of the method for power measurement in case of upgrade of a PON defined by claim 3, the stepwise reduced optical output power is obtained by reducing the bias current of a laser driver in the OLT and reducing a modulation current of the laser driver such that the extinction ratio of the optical signal remains constant.

Thus, reducing the OLT optical output power stepwise during the test phase in embodiments of the invention is implemented by modifying the laser driver that drives the laser in the OLT transceiver through a bias current and modulation current. The bias current is reduced step-by-step in subsequent steps of the test phase with a constant or variable step size. At the same time, the modulation current is modified step-by-step such that the extinction ratio, i.e. the ratio between the on- and off-level of the laser remains constant. In embodiments where the OLT transceiver is equipped with a laser driver controller or a laser driver lookup table that is used for instance to store bias current values and modulation current values as a function of temperature, the laser driver controller or the laser driver lookup table may be manipulated by a PON management and control entity to implement the stepwise output power reduction during the test phase. Such PON management and control entity can be a component installed on the central office line card holding the OLT, or it can be a component of a higher level PON management entity that controls multiple line cards or multiple OLTs.

In embodiments of the method for power measurement in case of upgrade of a PON defined by claim 4, the stepwise reduced optical output power is obtained by controlling a variable optical attenuator in the OLT.

Thus, reducing the OLT optical output power stepwise during the test phase in embodiments of the invention may be implemented by integrating a variable optical attenuator (abbreviated VOA) in the OLT transceiver. Such VOA applies a controllable attenuation to the output power of the laser in the OLT transceiver. The attenuation applied by the VOA is controllable through a VOA controller or VOA lookup table wherein attenuation values to be applied during subsequent steps of the test phase are stored. The VOA controller or the VOA lookup table may be manipulated by a PON management and control entity to implement the stepwise output power reduction during the test phase. Such PON management and control entity can be a component installed on the central office line card holding the OLT, or it can be a component of a higher level PON management entity that controls multiple line cards or multiple OLTs.

In embodiments of the method for power measurement in case of upgrade of a PON defined by claim 5, the stepwise reduced optical output power is obtained by controlling the gain of a semiconductor optical amplifier or SOA in the OLT.

Indeed, as an alternative to the VOA with lookup table of attenuation values, embodiments of the OLT may be equipped with a SOA and lookup table of gain values to be used by the SOA in subsequent steps of the test phase in order to implement the step-by-step reduction of transmitted optical power.

In embodiments of the method for power measurement in case of upgrade of a PON defined by claim 6, the stepwise reduced optical output power is obtained by controlling a laser with external modulator in the OLT.

Thus, yet another alternative relies on the use of a laser with external modulator that is controlled to implement the step-by-step reduction of transmitted optical power in the test phase. Various types of modulators can be used, like for instance an electro-absorption modulator or EAM, a laser intensity modulator, a laser field modulator, etc.

In embodiments of the method for power measurement in case of upgrade of a PON defined by claim 7, the predetermined system performance indicator comprises one or more of:
- a Bit Error Rate BER measured by the ONU during the test phase;
- a packet loss rate measured by the ONU during the test phase;
- a loss of signal indicator generated by the ONU during the test phase;
- a Forward Error Correction indicator or FEC indicator determined by the ONU during the test phase; or
- a combination of any of the foregoing.

Thus, the predetermined system performance indicator that is monitored during the test phase may for instance be the Bit Error Rate (abbreviated BER) or the Bit Interleaved Parity (abbreviated BIR) which is basically using the BER counting in a field of the PLOAM messages. It is noticed that the accuracy of the BER measurement can be increased by the OLT introducing a larger PLOAM rate. This BER is already measured by existing ONU transceivers, and consequently simply may be reported during subsequent steps of the test phase to the OLT or to a management function. As soon as the BER of one ONU exceeds a predefined BER threshold, the performance of the PON is assumed to drop below a performance threshold and the OLT output power used in the corresponding step of the test phase is logged to calculate the system power margin. Alternatively, at a higher layer, the packet loss rate may be monitored and serve as the predetermined system performance indicator during the test phase. The packet loss rate is already measured by many existing ONU transceivers, and therefore simply may be reused during the test phase when reported to the OLT or to a management function. As soon as the packet loss rate of one ONU exceeds a predefined packet loss threshold, the performance of the PON is assumed to drop below a performance threshold and the OLT output power used in the corresponding step of the test phase is logged to calculate the system power margin. In another alternative, the loss of signal indicator generated by ONUs can be used as the predetermined system performance indicator during the test phase. As soon as one ONU indicates loss of signal to the OLT or to a management function, the performance of the PON is assumed to drop below a performance threshold and the OLT output power used in the corresponding step of the test phase is logged to calculate the system power margin. At a higher layer also the Forward Error Correction (abbreviated FEC) indicator can be used as predetermined system performance indicator. FEC is implemented by the current existing ONU transceivers. An indication of the FEC level therefore simply may be reused during the test phase when reported to the OLT or a management function. As soon as the FEC indicator of one ONU exceeds a certain predefined FEC threshold, the performance of the PON is assumed to drop below a performance threshold and the OLT output power used in the corresponding step of the test phase is logged to calculate the system power margin. It is noticed that either hard- or soft-bit information can be analysed, or FEC output BER levels. Potential references to allow for a certain BER evaluation can be the use of a predetermined sequence in the test phase that is known to the ONU (e.g. a PRBS or pseudo-random bit sequence). This procedure includes the necessary communication from OLT to ONUs to enter such a test phase and to provide the necessary information selecting the correct reference, finding the correct reference in time, performing the BER counting, and reporting towards the OLT. It is noticed that the same approach could be applied to the above-described BER measurement directly, i.e. including a PRBS into the payload such that the accuracy of the measurement is increased compared to the BIP approach. The skilled person shall appreciate that other system performance indicators may be used in alternate embodiments. Also, plural system performance indicators and respective system performance thresholds may be combined through logic operators into more complex system performance criteria to generate variant embodiments.

Embodiments of the method for power measurement in case of upgrade of a PON defined by claim 8, further comprise receiving direct power measurements from said ONUs and using said direct power measurements to determine said system power margin.

To further increase the accuracy of the relative power measurement, the received system performance indicator from the ONUs can be combined with the direct power measurements from the DDM component in the ONUs. The obtained direct power measurement from the DDM can for instance be cross-checked with the step-by-step reduced optical output power of the OLT transmitter. This way, tracking the received optical power at the start point in case the optical output power of the transmitter is not changed up to the optical received power for which for example packet loss is indicated by an ONU, the available system power margin is directly obtained and can be compared with the one obtained from the step-by-step attenuation process.

The above defined object is also achieved, according to a second example aspect of the present disclosure, by a system for power measurement in case of upgrade of a passive optical network PON comprising an optical line termination OLT with controllable optical output power, an optical distribution network ODN and a plurality of optical network units ONUs, the system being defined by claim 9, comprising a controller configured to:
- control the OLT to generate and transmit in a test phase an optical signal starting at current operational optical output power and stepwise reducing optical output power;
- receive from the ONUs in subsequent steps of the test phase measurements of a predetermined system performance indicator;
- determine the difference between the current operational optical output power of the OLT and the optical output power of the OLT in a step of the test phase wherein the predetermined system performance indicator drops below a predetermined performance threshold for an ONU, thereby obtaining a system power margin;
- determine from the system power margin a minimum optical loss budget of an optical transceiver suitable for the ONUs after upgrade of the PON.

In embodiments of the system for power measurement in case of upgrade of a passive optical network PON defined by claim 10,
the OLT comprises a laser and a laser driver with configurable bias current and modulation current for the laser, and a look-up table of bias current values and modulation current values; and
the controller is configured to store in the look-up table bias current values and modulation current values to be used by the laser driver in subsequent steps of the test phase.

As already mentioned above, reducing the OLT optical output power stepwise during the test phase in embodiments of the invention is implemented by modifying a laser driver that drives a laser in the OLT transceiver through a bias current and modulation current the values of which are extracted from a look-up table. Such OLT transceiver is equipped with a laser driver lookup table that is used for instance to store bias current values and modulation current values as a function of temperature. This laser driver lookup table may be manipulated by a PON management and control entity, the so called controller, to implement the stepwise output power reduction during the test phase. The bias current is reduced step-by-step in subsequent steps of the test phase with a constant or variable step size. At the same time, the modulation current is modified step-by-step, for example such that the extinction ratio, i.e. the ratio between the on- and off-level of the laser remains constant. The controller can be a component installed on the central office line card holding the OLT, or it can be a component of a higher level PON management entity that controls multiple line cards or multiple OLTs.

In embodiments of the system for power measurement in case of upgrade of a passive optical network PON defined by claim 11,
the OLT comprises a laser and a variable optical attenuator, and a look-up table of attenuation values; and
the controller is configured to store in the look-up table attenuation values to be used by the variable optical attenuator in subsequent steps of the test phase.

As already mentioned above, reducing the OLT optical output power stepwise during the test phase in embodiments of the invention can be implemented by integrating a variable optical attenuator (abbreviated VOA) in the OLT transceiver. Such VOA applies a controllable attenuation to the output power of the laser in the OLT transceiver. The attenuation applied by the VOA is controllable through a VOA controller or VOA lookup table wherein attenuation values to be applied during subsequent steps of the test phase are stored. The VOA controller or the VOA lookup table may be manipulated by a PON management and control entity, named the controller, to implement the stepwise output power reduction during the test phase. Such controller can be a component installed on the central office line card holding the OLT, or it can be a component of a higher level PON management entity that controls multiple line cards or multiple OLTs.

In embodiments of the system for power measurement in case of upgrade of a passive optical network PON defined by claim 12,
- the OLT comprises a laser, a semiconductor optical amplifier or SOA, and a look-up table of gain values; and
- the controller is configured to store in the look-up table gain values to be used by the SOA in subsequent steps of the test phase.

Indeed, as already mentioned above, alternative embodiments of the OLT may be equipped with a SOA and lookup table wherein the gain values are stored to be used by the SOA in subsequent steps of the test phase in order to implement the step-by-step reduction of transmitted optical power. The SOA controller or the SOA lookup table may be manipulated by a PON management and control entity, named the controller, to implement the stepwise output power reduction during the test phase. Such controller can be a component installed on the central office line card holding the OLT, or it can be a component of a higher level PON management entity that controls multiple line cards or multiple OLTs.

In embodiments of the system for power measurement in case of upgrade of a passive optical network PON defined by claim 13,
- the OLT comprises a laser with external modulator; and
- the controller is configured to control the external modulator in subsequent steps of the test phase.

Indeed, as already mentioned here above, further alternative implementations rely on the use of a laser with external modulator that is controlled to implement the step-by-step reduction of transmitted optical power in the test phase. Various types of external modulators can be used, like for instance an electro-absorption modulator or EAM, a laser intensity modulator, a laser field modulator, etc.

### Brief Description of the Drawings

Some example embodiments will now be described with reference to the accompanying drawings.
Fig. 1 shows an example implementation of a passive optical network wherein example embodiments of the method and system for power measurement according to the invention can be deployed;
Fig. 2 is a graph illustrating operation of an exemplary OLT transmitter in example embodiments of the method and system for power measurement according to the invention;
Fig. 3 is a block diagram illustrating a first embodiment of the system for power measurement according to the invention relying on a first possible implementation of the OLT transmitter 300;
Fig. 4 is a block diagram illustrating a second embodiment of the system for power measurement according to the invention relying on a second possible implementation of the OLT transmitter 400; and
Fig. 5 shows an example embodiment of a suitable computing system 500 for performing one or several steps in embodiments of the invention.

### Detailed Description of Embodiment(s)

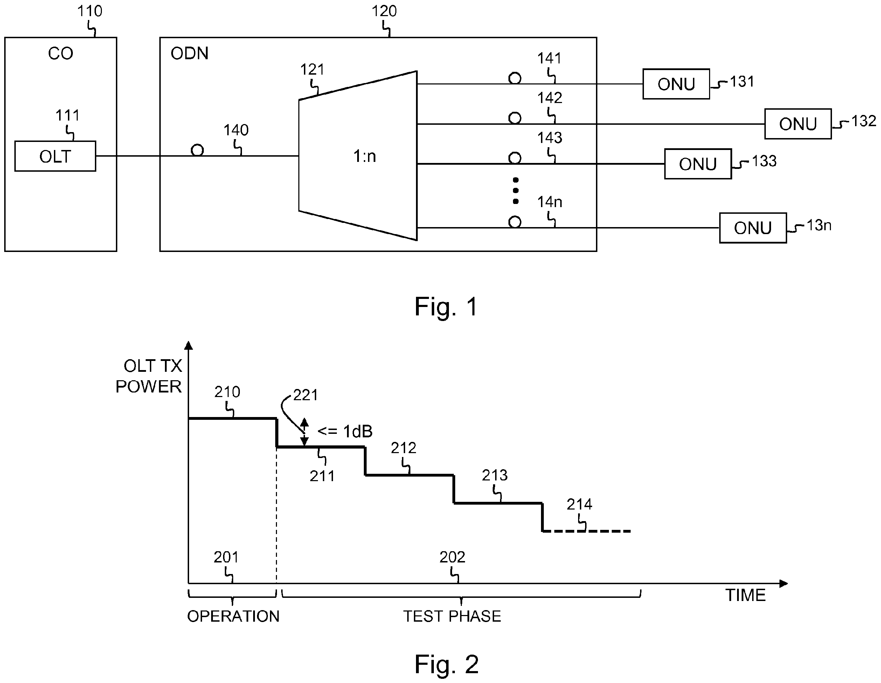

Fig. 1 illustrates the typical architecture of a Passive Optical Network or PON. An optical line termination, OLT or 111, at a central office, CO or 110, is coupled to multiple optical endpoints or ONUs, 131, 132, 133, ... 13n, via an optical distribution network, ODN or 120. The optical distribution network 120 has a tree-and-branch architecture and thereto comprises a optical feeder fibre 140, a passive 1:n splitter/multiplexer 121, and n optical distribution fibres 141, 142, 143, ..., 14n or drop fibres that connect the passive optical splitter/multiplexer 121 to respective ones of the ONUs 131 ... 13n. In example embodiments, n may for instance be 64. Typically, the central office 110 shall host multiple OLTs, similar to OLT 111. In example embodiments, 8 OLTs or 16 OLTs may for instance be integrated on a single linecard. The feeder fibre 140 is shared for downstream transmissions towards multiple ONUs and upstream transmissions from multiple ONUs. To avoid collisions between the n users sharing the PON, a time-division multiplexing or TDM protocol is used in downstream direction and a time-division multiple access or TDMA protocol is used in upstream direction. The ONUs 131 ... 13n in other words receive data in different time intervals and transmit data in different time intervals assigned to them. The upstream time intervals assigned to the ONUs may have equal or different lengths, are often called timeslots, and jointly form a timeframe of for instance 125 microseconds.

In order to explain embodiments of the invention, it is assumed that the PON of Fig. 1 is deployed and operating according to a certain standard or technology, for instance GPON, and will be upgraded to a next generation standard or technology, for instance XGS-PON. Before the upgrade takes place, the operator and/or system vendor desire to determine the most appropriate optical loss budget class of the transceivers that will be used after the upgrade. Thereto, as illustrated by Fig. 2, the PON is brought from normal operation 201 into a test phase 202 wherein a relative power measurement will take place the outcome of which shall enable the operator or system vendor to determine the most appropriate transceiver class.

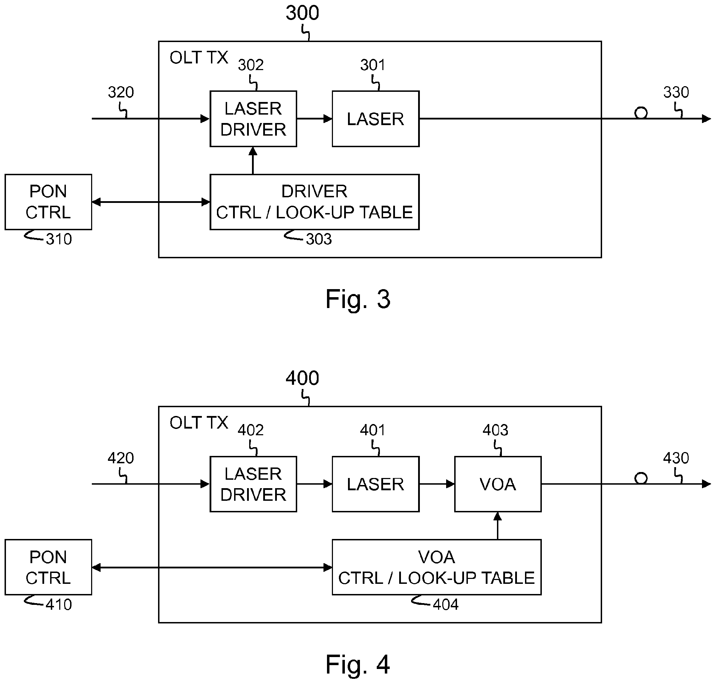

Fig. 2 is a graph showing the optical output power of the transmitter of OLT 111 (vertical axis labelled OLT TX POWER) as a function of time (horizontal axis labelled TIME). Fig. 2 more precisely shows the current operational optical power level 210 during operation 201 of the PON, and the optical output power levels 211, 212, 213, 214 of that same OLT transmitter in subsequent steps of the test phase 202. In the test phase, a relative power measurement with variable transmitter power levels 211-214 and analysis of the impact on the data transmission shall provide reliable information on the available system power margin. The execution of the relative power measurement of the ODN 120, i.e. of each connection from OLT 111 to ONUs 131-13n, thus requires a stepwise change of the transceiver output power at the OLT 111 and measurement of a predetermined system performance indicator at the ONUs 131 - 13n. The transmitter inside the OLT is thus modified in a way that the optical output power can be reduced step-by-step. Two possible implementations will be described below with reference to Fig. 3 and Fig. 4. As is indicated in Fig. 2, the reduction 221 in transmit power between two subsequent steps preferably stays below 1 dB. This way, the relative power measurement will deliver reliable figures and the accuracy of the calculated system power margin is expected to be better than 1 dB. To monitor the influence of the drop in received optical power levels, various mechanisms inside the ONU transceivers are already available per the GPON standard and can be used. A reasonable system performance indicator could for example be the Bit Error Rate (BER) measured by the ONUs 131-13n and reported back to the central office 110 as part of the embedded Operation and Maintenance (OAM) channel inside the GPON Transmission Convergence (GTC) message defined in GPON Specification ITU-T G.984.3. However, other indicators like the packet loss rate, the loss-of-signal identifier, or the Forward Error Correction (FEC) indicator could be used too, or even combinations of them are possible. The received system performance indicator is analysed at the central office side, for instance by a management and control function available there, or higher up in the system by a management platform under control of the network operator. The OLT transmit power level at the point in time the system performance drops below a predefined threshold, for example level 214, is logged and used to calculate the system power margin. The system power margin is for example obtained by subtracting the latter transmit power level 214 from the current full operational transmit power level 210 of the OLT 111. The PON network operator can now define a threshold for his infrastructure up to which power margin figure a certain transceiver class can be installed and operated. In other words, from the measured system power margin of the ODN 120, a minimum optical loss budget is determined for the transceivers suitable for use after the upgrade. Once the appropriate transceiver class has been determined, a selection is made of the transceivers for installation in the ONUs 131-13n and possibly also for installation in the OLT 111. For lines with no or only a small system power margin, the operator can either use transceivers with higher optical loss budgets, i.e. transceivers from a different transceiver class, or arrange for a manual measurement at the customer premises to obtain a link loss measurement with increased accuracy.

It is noticed that, to further increase the accuracy and to provide a mechanism to check the quality of the relative power measurement described here above, the received system performance indicator(s) from the ONU can be correlated with the traditional direct power level measurements obtained from the DDM function. The obtained value(s) from the DDM function could for instance be cross-checked with the step-by-step reduced optical output power of the OLT transmitter. This way, tracking the received optical power at the start point, i.e. when the optical output power of the OLT transmitter is not yet changed, up to the optical power received for instance when packet losses are indicated (or alternate parameters indicate a drop of the system performance below a certain threshold), the available system power margin is directly obtained and can be compared with the one obtained from the step-by-step attenuation process.

Fig. 3 shows a first embodiment of the system for power measurement according to the invention relying on a first possible implementation of the OLT transmitter 300. The OLT transmitter 300 drawn in Fig. 3 comprises a laser 301, a laser driver 302, and a laser driver controller and/or look-up table 303. Fig. 3 further shows a PON management and control unit 310 that may form part of the OLT, may be located on the line card hosting the OLT in order to manage and control plural OLTs on the same line card, or may be located higher up in the network, for instance in a network management platform running on a server or computer under control of the network operator. The OLT transmitter 300 receives data or signals 320 that are turned into optical signals 330 for downstream transmission by the laser 301 under control of laser driver 302.

In the implementation illustrated by Fig. 3, the laser driver 302 inside the OLT transmitter 300 is modified in such a way that the optical output power can be reduced step-by-step. However, the extinction ratio of the optical output signal 330 is kept constant to enable a reliable measurement of the data transmission impact at ONU side when reducing the OLT transmit power stepwise in the test phase. Dependent of the transmitter implementation, its internal controller and/or look-up table 303 can be used to implement the step-by-step transmit power reduction. Thereto, software/firmware modifications are required, but the OLT hardware of an existing GPON OLT transmitter can be kept without any changes. By use of the PON management and control interface between the PON management and control platform 310 and the OLT transmitter 300, it is possible to access the controller and/or look-up table 303, which controls the laser driver 302 inside the OLT transmitter 300. The controller and/or look-up table 303 is normally used to provide parameters to the laser driver 302 to keep the laser output power and extinction ratio constant in case of temperature changes and to counteract degradations resulting from ageing. The controller and/or look-up table 303 can be modified to control the laser driver 302 to reduce the laser output power step-by-step during the test phase: the bias current is reduced stepwise and also the modulation current is preferably modified to keep the extinction ratio constant in subsequent steps of the test phase. At the same time, the impact on the data transmission will be observed: more particularly, indirectly will be observed if the received optical power at ONU side drops below a certain level by monitoring one or several system performance indicators and applying a system performance criterion that is representative for such drop in received optical power. Compared to power measurement with an external power meter, no field technician is involved and no or limited service interruption is required.

Fig. 4 shows a second embodiment of the system for power measurement according to the invention relying on a second possible implementation of the OLT transmitter 400. The OLT transmitter 400 drawn in Fig. 4 comprises a laser 401, a laser driver 402, a variable optical attenuator 403 or VOA, and a VOA controller and/or look-up table 404. Fig. 4 further shows a PON management and control unit 410 that may form part of the OLT, may be located on the line card hosting the OLT in order to manage and control plural OLTs on the same line card, or may be located higher up in the network, for instance in a network management platform running on a server or computer under control of the network operator. The OLT transmitter 400 receives data or signals 420 that are turned into optical signals 430 for downstream transmission by the laser 401 and VOA 403 under control of laser driver 402.

In the implementation illustrated by Fig. 4, a variable optical attenuator 403 is integrated in the OLT transmitter 400 to attenuate the output optical signal in a controlled way in the test phase. Dependent of the transmitter implementation, an internal VOA controller and/or look-up table 404 can be used to implement the step-by-step transmit power reduction in the test phase. Thereto, software/firmware modifications are required. By use of the PON management and control interface between the PON management and control platform 410 and the OLT transmitter 400, it is possible to access the VOA controller and/or look-up table 404, which controls the VOA 403 inside the OLT transmitter 300. The VOA controller and/or look-up table 404 can be configured to control the VOA 403 to reduce the laser output power step-by-step during the test phase. At the same time, the impact on the data transmission will be observed: more particularly, indirectly will be observed if the received optical power at ONU side drops below a certain level by monitoring one or several system performance indicators and applying a system performance criterion that is representative for such drop in received optical power. Although not shown in Fig. 4, it is noticed that the OLT transmitter 400 similar to the OLT transmitter 300 of Fig. 3 comprises a controller and/or look-up table for the laser driver 402 that is used to provide parameters to the laser driver 402 to keep the laser output power and extinction ratio constant in case of temperature changes and to counteract degradations resulting from ageing. Compared to power measurement with an external power meter, also the implementation illustrated by Fig. 4 brings the advantage that no field technician is involved and no or limited service interruption is required.

Embodiments of the invention provide a solution to measure optical power levels (or equivalently power attenuation levels) at the ONUs within a Fibre-To-The-Home (FTTH) network enabling to select the appropriate transceiver class in case of a system upgrade (e.g. from GPON to XGS-PON). The proposed solution can be implemented by re-using mechanisms which are already available within existing PON transceiver modules. The approach relies on evaluating the power loss margins that a system has by measuring the relative power of each ODN connection from OLT to ONUs. Critical paths/links in the network can be identified and are possibly further evaluated. Thus, worst case, only such identified critical paths need to be characterized by a technician or a higher budget class transceiver has to be requested/installed by the operators on such links. This reduces significantly the cost and complexity of the PON upgrade process and increases highly the predictability of choices by operators, which will help system vendors to reduce our time to market.

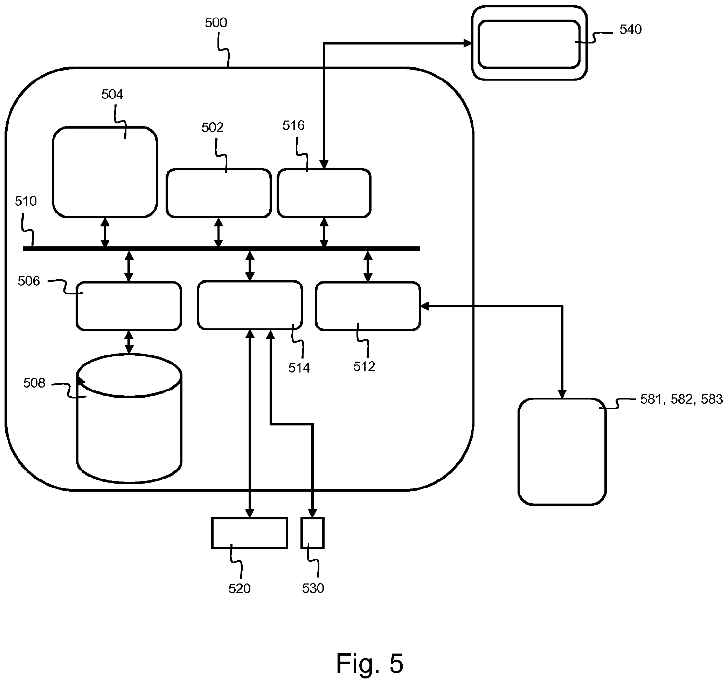

Fig. 5 shows a suitable computing system 500 enabling to implement embodiments of the method for power measurement in a PON according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to the controller circuitry 310 (and possibly 303) or 410 (and possibly 404) in the embodiments illustrated by Fig. 3 or Fig. 4.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodimenst. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for power measurement in case of upgrade of a passive optical network PON comprising an optical line termination OLT (111), an optical distribution network ODN (120) and a plurality of optical network units ONUs (131-13n),
**CHARACTERISED IN THAT** said method comprises:
- said OLT (111) generating and transmitting in a test phase (202) an optical signal starting at current operational optical output power (210) and stepwise reducing optical output power (211-214);
- said ONUs (131-13n) measuring in subsequent steps of said test phase (202) a predetermined system performance indicator;
- determining the difference between said current operational optical output power (210) of said OLT (111) and said optical output power (214) of said OLT (111) in a step of said test phase (202) wherein said predetermined system performance indicator drops below a predetermined performance threshold for an ONU, thereby obtaining a system power margin;
- determining from said system power margin a minimum optical loss budget of an optical transceiver suitable for said ONUs (131-13n) after upgrade of said PON.

2. A method for power measurement in case of upgrade of a PON according to claim 1, wherein said optical output power is reduced in steps (221) of at most 1 dB.

3. A method for power measurement in case of upgrade of a PON according to claim 1 or claim 2, wherein said stepwise reduced optical output power is obtained by reducing the bias current of a laser driver (302) in said OLT and reducing a modulation current of said laser driver (302) such that the extinction ratio of said optical signal (330) remains constant.

4. A method for power measurement in case of upgrade of a PON according to claim 1 or claim 2, wherein said stepwise reduced optical output power is obtained by controlling a variable optical attenuator (403) in said OLT.

5. A method for power measurement in case of upgrade of a PON according to claim 1 or claim 2, wherein said stepwise reduced optical output power is obtained by controlling the gain of a semiconductor optical amplifier or SOA in said OLT.

6. A method for power measurement in case of upgrade of a PON according to claim 1 or claim 2, wherein said stepwise reduced optical output power is obtained by controlling a laser with external modulator in said OLT.

7. A method for power measurement in case of upgrade of a PON according to one of the preceding claims, wherein said predetermined system performance indicator comprises one or more of:
- a Bit Error Rate BER measured by said ONU (131-13n) during said test phase (202);
- a packet loss rate measured by said ONU (131-13n) during said test phase (202);
- a loss of signal indicator generated by said ONU (131-13n) during said test phase (202);
- a Forward Error Correction indicator or FEC indicator determined by said ONU (131-13n) during said test phase (202); or
- a combination of any of the foregoing.

8. A method for power measurement in case of upgrade of a PON according to one of the preceding claims, further comprising receiving direct power measurements from said ONUs (131-13n) and using said direct power measurements to determine said system power margin.

9. A system for power measurement in case of upgrade of a passive optical network PON comprising an optical line termination OLT (111) with controllable optical output power, an optical distribution network ODN (120) and a plurality of optical network units ONUs (131-13n),
**CHARACTERISED IN THAT** said system comprises a controller (310; 410) configured to:
- control said OLT to generate and transmit in a test phase (202) an optical signal starting at current operational optical output power (210) and stepwise reducing optical output power (211-214);
- receive from said ONUs (131-13n) in subsequent steps of said test phase (202) measurements of a predetermined system performance indicator;
- determine the difference between said current operational optical output power (210) of said OLT (111) and said optical output power (214) of said OLT (111) in a step of said test phase (202) wherein said predetermined system performance indicator drops below a predetermined performance threshold for an ONU, thereby obtaining a system power margin;
- determine from said system power margin a minimum optical loss budget of an optical transceiver suitable for said ONUs (131-13n) after upgrade of said PON.

10. A system for power measurement in case of upgrade of a passive optical network PON according to claim 9,
wherein said OLT comprises a laser (301) and a laser driver (302) with configurable bias current and modulation current for said laser (301), and a look-up table (303) of bias current values and modulation current values; and
wherein said controller (310) is configured to store in said look-up table (303) bias current values and modulation current values to be used by said laser driver (302) in subsequent steps of said test phase (202).

11. A system for power measurement in case of upgrade of a passive optical network PON according to claim 9,
wherein said OLT comprises a laser (401) and a variable optical attenuator (403), and a look-up table (404) of attenuation values; and
wherein said controller (410) is configured to store in said look-up table (404) attenuation values to be used by said variable optical attenuator (403) in subsequent steps of said test phase (202).

12. A system for power measurement in case of upgrade of a passive optical network PON according to claim 9,
wherein said OLT comprises a laser, a semiconductor optical amplifier or SOA, and a look-up table of gain values; and
wherein said controller is configured to store in said look-up table gain values to be used by said SOA in subsequent steps of said test phase (202).

13. A system for power measurement in case of upgrade of a passive optical network PON according to claim 9,
wherein said OLT comprises a laser with external modulator; and
wherein said controller is configured to control said external modulator in subsequent steps of said test phase (202).

## Patentansprüche

1. Verfahren zur Leistungsmessung im Falle einer Aufrüstung eines passiven optischen Netzwerks PON, das einen optischen Leitungsabschluss OLT (111), ein optisches Verteilungsnetzwerk ODN (120) und eine Vielzahl von optischen Netzwerkeinheiten ONUs (131-13n) umfasst,
**dadurch gekennzeichnet, dass** das Verfahren Folgendes umfasst:
- Erzeugen und Übertragen eines optischen Signals beginnend bei einer aktuellen optischen Betriebsausgangsleistung (210) und schrittweises Reduzieren der optischen Ausgangsleistung (211-214) in einer Testphase (202) durch den OLT (111);
- Messen eines vorbestimmten Systemleistungsindikators durch die ONUs (131-13n) in aufeinanderfolgenden Schritten der Testphase (202);
- Bestimmen der Differenz zwischen der aktuellen optischen Betriebsausgangsleistung (210) des OLT (111) und der optischen Ausgangsleistung (214) des OLT (111) in einem Schritt der Testphase (202), wobei der vorbestimmte Systemleistungsindikator für eine ONU unter einen vorbestimmten Leistungsschwellwert abfällt, wodurch eine Systemleistungsmarge erhalten wird;
- Bestimmen eines minimalen optischen Verlustbudgets eines optischen Sendeempfängers, der nach einer Aufrüstung des PON für die ONUs (131-13n) geeignet ist, anhand der Systemleistungsmarge.

2. Verfahren zur Leistungsmessung im Falle einer Aufrüstung eines PON nach Anspruch 1, wobei die optische Ausgangsleistung in Schritten (221) von höchstens 1 dB reduziert wird.

3. Verfahren zur Leistungsmessung im Falle einer Aufrüstung eines PON nach Anspruch 1 oder Anspruch 2, wobei die schrittweise reduzierte optische Ausgangsleistung durch Reduzieren des Ruhestroms eines Lasertreibers (302) im OLT und Reduzieren eines Modulationsstroms des Lasertreibers (302) erhalten wird, derart, dass das Löschverhältnis des optischen Signals (330) konstant bleibt.

4. Verfahren zur Leistungsmessung im Falle einer Aufrüstung eines PON nach Anspruch 1 oder Anspruch 2, wobei die schrittweise reduzierte optische Ausgangsleistung durch Steuern eines variablen optischen Dämpfers (403) im OLT erhalten wird.

5. Verfahren zur Leistungsmessung im Falle einer Aufrüstung eines PON nach Anspruch 1 oder Anspruch 2, wobei die schrittweise reduzierte optische Ausgangsleistung durch Steuern der Verstärkung eines optischen Halbleiterverstärkers oder SOA im OLT erhalten wird.

6. Verfahren zur Leistungsmessung im Falle einer Aufrüstung eines PON nach Anspruch 1 oder Anspruch 2, wobei die schrittweise reduzierte optische Ausgangsleistung durch Steuern eines Lasers mit externem Modulator im OLT erhalten wird.

7. Verfahren zur Leistungsmessung im Falle einer Aufrüstung eines PON nach einem der vorhergehenden Ansprüche, wobei der vorbestimmte Systemleistungsindikator eines oder mehreres von Folgendem umfasst:
- eine Bitfehlerrate BER, die während der Testphase (202) von der ONU (131-13n) gemessen wird;
- eine Paketverlustrate, die während der Testphase (202) von der ONU (131-13n) gemessen wird;
- einen Signalverlustratenindikator, der während der Testphase (202) von der ONU (131-13n) erzeugt wird;
- einen Vorwärtsfehlerkorrekturindikator oder FEC-Indikator, der während der Testphase (202) von der ONU (131-13n) bestimmt wird; oder
- eine Kombination aus Beliebigem des Vorstehenden.

8. Verfahren zur Leistungsmessung im Falle einer Aufrüstung eines PON nach einem der vorhergehenden Ansprüche, das ferner das Empfangen von direkten Leistungsmessungen von den ONUs (131-13n) und das Verwenden von direkten Leistungsmessungen, um die Systemleistungsmarge zu bestimmen, umfasst.

9. System zur Leistungsmessung im Falle einer Aufrüstung eines passiven optischen Netzwerks PON, das einen optischen Leitungsabschluss OLT (111) mit steuerbarer optischer Ausgangsleistung, ein optisches Verteilungsnetzwerk ODN (120) und eine Vielzahl von optischen Netzwerkeinheiten ONUs (131-13n) umfasst,
**dadurch gekennzeichnet, dass** das System eine Steuerung (310; 410) umfasst, die zu Folgendem ausgelegt ist:
- Steuern des OLT zum Erzeugen und Übertragen eines optischen Signals beginnend bei einer aktuellen optischen Betriebsausgangsleistung (210) und schrittweisen Reduzieren der optischen Ausgangsleistung (211-214) in einer Testphase (202);
- Empfangen von Messungen eines vorbestimmten Systemleistungsindikators von den ONUs (131-13n) in aufeinanderfolgenden Schritten der Testphase (202);
- Bestimmen der Differenz zwischen der aktuellen optischen Betriebsausgangsleistung (210) des OLT (111) und der optischen Ausgangsleistung (214) des OLT (111) in einem Schritt der Testphase (202), wobei der vorbestimmte Systemleistungsindikator für eine ONU unter einen vorbestimmten Leistungsschwellwert abfällt, wodurch eine Systemleistungsmarge erhalten wird;
- Bestimmen eines minimalen optischen Verlustbudgets eines optischen Sendeempfängers, der nach einer Aufrüstung des PON für die ONUs (131-13n) geeignet ist, anhand der Systemleistungsmarge.

10. System zur Leistungsmessung im Falle einer Aufrüstung eines passiven optischen Netzwerks PON nach Anspruch 9,
wobei der OLT einen Laser (301) und einen Lasertreiber (302) mit auslegbarem Ruhestrom und Modulationsstrom für den Laser (301) und eine Nachschlagetabelle (303) mit Ruhestromwerten und Modulationsstromwerten umfasst; und
wobei die Steuerung (310) dazu ausgelegt ist, Ruhestromwerte und Modulationsstromwerte, die vom Lasertreiber (302) in aufeinanderfolgenden Schritten der Testphase (202) zu verwenden sind, in der Nachschlagetabelle (303) zu speichern.

11. System zur Leistungsmessung im Falle einer Aufrüstung eines passiven optischen Netzwerks PON nach Anspruch 9,
wobei der OLT einen Laser (401) und einen variablen optischen Dämpfer (403) sowie eine Nachschlagetabelle (404) mit Dämpfungswerten umfasst; und
wobei die Steuerung (410) dazu ausgelegt ist, Dämpfungswerte, die vom variablen optischen Dämpfer (403) in aufeinanderfolgenden Schritten der Testphase (202) zu verwenden sind, in der Nachschlagetabelle (404) zu speichern.

12. System zur Leistungsmessung im Falle einer Aufrüstung eines passiven optischen Netzwerks PON nach Anspruch 9,
wobei der OLT einen Laser, einen optischen Halbleiterverstärker oder SOA und eine Nachschlagetabelle mit Verstärkungswerten umfasst; und
wobei die Steuerung dazu ausgelegt ist, Verstärkungswerte, die vom SOA in aufeinanderfolgenden Schritten der Testphase (202) zu verwenden sind, in der Nachschlagetabelle zu speichern.

13. System zur Leistungsmessung im Falle einer Aufrüstung eines passiven optischen Netzwerks PON nach Anspruch 9,
wobei der OLT einen Laser mit externem Modulator umfasst; und
wobei die Steuerung dazu ausgelegt ist, den externen Modulator in aufeinanderfolgenden Schritten der Testphase (202) zu steuern.

## Revendications

1. Procédé de mesure de puissance en cas de mise à niveau d'un réseau optique passif PON comprenant une terminaison de ligne optique OLT (111), un réseau de distribution optique ODN (120) et une pluralité d'unités de réseau optique ONU (131-13n),
**caractérisé en ce que** ledit procédé comprend :
- la génération et la transmission, par ladite OLT (111) dans une phase de test (202), d'un signal optique commençant à une puissance de sortie optique opérationnelle actuelle (210) et réduisant par étapes une puissance de sortie optique (211-214) ;
- la mesure, par lesdites ONU (131-13n) dans des étapes ultérieures de ladite phase de test (202), d'un indicateur de performance de système prédéterminé ;
- la détermination de la différence entre ladite puissance de sortie optique opérationnelle actuelle (210) de ladite OLT (111) et ladite puissance de sortie optique (214) de ladite OLT (111) dans une étape de ladite phase de test (202), dans lequel ledit indicateur de performance de système prédéterminé tombe en dessous d'un seuil de performance prédéterminé pour une ONU, obtenant ainsi une marge de puissance de système ;
- la détermination, à partir de ladite marge de puissance de système, d'un budget de perte optique minimum d'un émetteur-récepteur optique approprié pour lesdites ONU (131-13n) après la mise à niveau dudit PON.

2. Procédé de mesure de puissance en cas de mise à niveau d'un PON selon la revendication 1, dans lequel ladite puissance de sortie optique est réduite par étapes (221) d'au plus 1 dB.

3. Procédé de mesure de puissance en cas de mise à niveau d'un PON selon la revendication 1 ou la revendication 2, dans lequel ladite puissance de sortie optique réduite par étapes est obtenue en réduisant le courant de polarisation d'un pilote laser (302) dans ladite OLT et en réduisant un courant de modulation dudit pilote laser (302) de sorte que le rapport d'extinction dudit signal optique (330) reste constant.

4. Procédé de mesure de puissance en cas de mise à niveau d'un PON selon la revendication 1 ou la revendication 2, dans lequel ladite puissance de sortie optique réduite par étapes est obtenue en commandant un atténuateur optique variable (403) dans ladite OLT.

5. Procédé de mesure de puissance en cas de mise à niveau d'un PON selon la revendication 1 ou la revendication 2, dans lequel ladite puissance de sortie optique réduite par étapes est obtenue en commandant le gain d'un amplificateur optique à semi-conducteurs ou SOA dans ladite OLT.

6. Procédé de mesure de puissance en cas de mise à niveau d'un PON selon la revendication 1 ou la revendication 2, dans lequel ladite puissance de sortie optique réduite par étapes est obtenue en commandant un laser avec modulateur externe dans ladite OLT.

7. Procédé de mesure de puissance en cas de mise à niveau d'un PON selon l'une des revendications précédentes, dans lequel ledit indicateur de performance de système prédéterminé comprend un ou plusieurs parmi :
- un taux d'erreur de bit BER mesuré par ladite ONU (131-13n) pendant ladite phase de test (202) ;
- un taux de perte de paquets mesuré par ladite ONU (131-13n) pendant ladite phase de test (202) ;
- un indicateur de perte de signal généré par ladite ONU (131-13n) pendant ladite phase de test (202) ;
- un indicateur de correction d'erreur avant ou un indicateur FEC déterminé par ladite ONU (131-13n) pendant ladite phase de test (202) ; ou
- une combinaison de tout ce qui précède.

8. Procédé de mesure de puissance en cas de mise à niveau d'un PON selon l'une des revendications précédentes, comprenant en outre la réception de mesures de puissance directes à partir desdites ONU (131-13n) et l'utilisation desdites mesures de puissance directes pour déterminer ladite marge de puissance de système.

9. Système de mesure de puissance en cas de mise à niveau d'un réseau optique passif PON comprenant une terminaison de ligne optique OLT (111) avec une puissance de sortie optique commandée, un réseau de distribution optique ODN (120) et une pluralité d'unités de réseau optique ONU (131-13n),
**caractérisé en ce que** ledit système comprend un dispositif de commande (310 ; 410) configuré pour :
- commander ladite OLT pour générer et transmettre dans une phase de test (202) un signal optique commençant à une puissance de sortie optique opérationnelle actuelle (210) et réduisant par étapes une puissance de sortie optique (211-214) ;
- recevoir à partir desdites ONU (131-13n) dans des étapes ultérieures de ladite phase de test (202) des mesures d'un indicateur de performance de système prédéterminé ;
- déterminer la différence entre ladite puissance de sortie optique opérationnelle actuelle (210) de ladite OLT (111) et ladite puissance de sortie optique (214) de ladite OLT (111) dans une étape de ladite phase de test (202), dans lequel ledit indicateur de performance de système prédéterminé tombe en dessous d'un seuil de performance prédéterminé pour une ONU, obtenant ainsi une marge de puissance de système ;
- déterminer à partir de ladite marge de puissance de système un budget de perte optique minimum d'un émetteur-récepteur optique approprié pour lesdites ONU (131-13n) après la mise à niveau dudit PON.

10. Système de mesure de puissance en cas de mise à niveau d'un réseau optique passif PON selon la revendication 9,
dans lequel ladite OLT comprend un laser (301) et un pilote laser (302) avec un courant de polarisation et un courant de modulation configurables pour ledit laser (301), et une table de consultation (303) de valeurs de courant de polarisation et de valeurs de courant de modulation ; et
dans lequel ledit dispositif de commande (310) est configuré pour stocker dans ladite table de consultation (303) des valeurs de courant de polarisation et des valeurs de courant de modulation à utiliser par ledit pilote laser (302) dans des étapes ultérieures de ladite phase de test (202).

11. Système de mesure de puissance en cas de mise à niveau d'un réseau optique passif PON selon la revendication 9,
dans lequel ladite OLT comprend un laser (401) et un atténuateur optique variable (403), et une table de consultation (404) de valeurs d'atténuation ; et
dans lequel ledit dispositif de commande (410) est configuré pour stocker dans ladite table de consultation (404) des valeurs d'atténuation à utiliser par ledit atténuateur optique variable (403) dans des étapes ultérieures de ladite phase de test (202).

12. Système de mesure de puissance en cas de mise à niveau d'un réseau optique passif PON selon la revendication 9,
dans lequel ladite OLT comprend un laser, un amplificateur optique à semi-conducteurs ou SOA, et une table de consultation de valeurs de gain ; et
dans lequel ledit dispositif de commande est configuré pour stocker dans ladite table de consultation des valeurs de gain à utiliser par ledit SOA dans des étapes ultérieures de ladite phase de test (202).

13. Système de mesure de puissance en cas de mise à niveau d'un réseau optique passif PON selon la revendication 9,
dans lequel ladite OLT comprend un laser avec modulateur externe ; et
dans lequel ledit dispositif de commande est configuré pour commander ledit modulateur externe dans des étapes ultérieures de ladite phase de test (202).
